# EUROPEAN PATENT APPLICATION

(11) **EP 1 072 215 A2**
(43) Date of publication of application: **31.01.2001**
(21) Application number: 00500116.9
(22) Date of filing: 02.06.2000
(51) Int. Cl.: A47B 31/00

(54) **Mobile beverage stand**

(30) Priority: 26.07.1999 ES 9901990 U
(71) Applicant: Criado Mellado, Antonio, 29590 Campanillas (Malaga) (ES)
(72) Inventor: Criado Mellado, Antonio, 29590 Campanillas (Malaga) (ES)
(74) Representative: Ungria Lopez, Javier

(57) **Abstract**

The stand permits the preparing of beverages such as coffee, juices and others made by means of standard automatic machines which require for their installation, a water inlet, an electricity source and a drainage point.

It includes a unit (3) with wheels (10) for mobility, as a support for the standard automatic machines (1,2) and inside which are housed tanks for water (5) and waste collection (8), connected to said automatic machines (1,2) through delivery means (6) if required.

The unit includes an electricity socket for the mains supply and/or the batteries housed inside.

A space is formed between the unit (3) and a top flat surface (14), where glasses, cups, etc. are placed.

## Description

### OBJECT OF THE INVENTION

The present invention, as stated in the title of this specification, concerns a mobile beverage stand, the purpose of which is to provide a mobile unit that does not require a water inlet or a drain and which nonetheless allows the preparation of kinds of drinks, such as coffee, tea, juices and the like which need water for their preparation, though it is equally applicable to a fixed stand.

The invention facilitates the preparation of breakfasts, afternoon snacks, drinks for lunches and dinners, etc., in premises without a water inlet or on sites where the mobile stand in question should not be mounted on a permanent basis, such as in gardens or terraces ; being of special application for hotels and restaurants, convention halls, group meetings, etc. The invention, moreover, permits beverages to be prepared without any unpleasant taste in those locations where the water from the public mains supply has a unpleasant taste or unsuitable characteristics, since the mobile stand referred to shall preferably be filled with natural mineral water.

### BACKGROUND OF THE INVENTION

Automatic coffee-making machines, juice-preparing machines and other beverage machines, all of which are employed in bars, restaurants and similar establishments, are well known. These standard machines, in general, require a water inlet and a drainage facility in order to work, which imply a drawback in that these machines are not mobile, cannot be mounted in locations where the corresponding water inlet and drainage facility are lacking, and cannot provide drinks other than from the corresponding public water mains. It is well known that the water employed is of great importance in the taste of the drink produced. In the majority of cases the water from the public mains supply is treated with some chemical product in order to eliminate bacteria. This treatment generally results in a unpleasant taste which is accentuated by rapid heating. To prepare good coffee, the water must be heated to 95°C, which would result in a unpleasant taste and poor quality. In addition, the excessive lime in the public water mains could reduce the useful life of these machines.

### DESCRIPTION OF THE INVENTION

In order to achieve the objectives and to avoid the drawbacks mentioned in preceding paragraphs, the invention consists of a mobile stand for dispensing beverages which uses standard beverage machines such as automatic coffee-making machines, juice-preparing machines, or others which normally need a water inlet and a drainage facility, but which by means of the mobile stand of the invention permits said machines to work without requiring a water inlet or a drain at the site where said stand is located.

The mobile stand is built in a unit in which an upper part and a lower part can be identified. The cited standard machines are mounted in said upper part, whilst there is an extensive storage space in the lower part of the unit in question. In said storage space there is a water tank which by means of a water impulsion means and a water pipe is connected with the water inlet inlets of the cited standard machines. Moreover in said storage space in the lower part of the mobile stand unit there is a waste water tank which through a waste water pipe is connected with the drainage facilities of the standard machines. Thus, the waste water from said machines will drop by gravity into the waste water tank, whilst the water in the water tank will be pumped up to the cited standard machines by the impulsion means. This defines the essential nature of the invention.

The water tank is filled preferably with natural mineral water, so that the drawbacks are avoided regarding unpleasant taste in the drinks prepared as a result of chlorine and chemical products, and regarding the shortening of the useful life of the standard machines due to the presence of lime in the water.

The mobile stand unit in question, has means for supplying electricity to the mentioned standard machines and the cited water impulsion means. The means in question normally comprise a simple standard electric mains socket. Nonetheless provision has been made for the electricity supply means to be independent, by employing batteries, generators, or the like, whereby the mobile stand could be made completely autonomous.

The mobile stand unit for serving beverages, also includes in its preferred embodiment a means of transport to facilitate its movement. Said means of transport usually consists of a set of wheels mounted on the underside of the aforementioned unit.

In addition, means for stabilising the position of said unit has been provided. These stabilising means usually comprise braking devices mounted on the underside of the stand unit and consist of a handwheel or lever which is situated inside the unit and which connects with a threaded rod that screws into the lower base of said unit and which in turn is connected to a foot that projects through the underside of the unit, whereby the turning of said handwheel or lever in one direction or the other determines the pressure exerted by the foot on the corresponding floor or its detachment therefrom.

The upper part of the stand unit, consists preferably of a flat surface that provides support for the standard machines such as automatic coffee-makers, juice-preparing machines, or others. This flat surface has a railed-off area which offers a space for locating glasses, cups, boxes with tea bags and similar items between the standard machines and the cited rail. Said flat surface is at a considerable distance from the lower part of the unit, so that another space is formed for storing glasses, cups, boxes with tea bags and similar items between the flat surface and the lower part of the unit. The flat surface is held to the said lower part by means of supporting pillars. In addition, between the flat surface and the lower part of the unit there is a column through which run the piping and conduits for water, waste water and electricity which connect the standard machines with the elements in the lower part of the unit.

In a preferred embodiment, the housing of the lower part of the unit consists of an ample cabinet with large doors at the front and side. Said cabinet houses the above mentioned water tank and the waste water tank, which shall preferably be easily removable in order to make their cleaning simpler.

The water impulsion means which was mentioned above, can be implemented by means of a motorised pump connected to the water tank through a valve and connected to the water pipes which go to the standard machines through another valve and a manometer which permits the pressure to be controlled in the corresponding hydraulic circuit.

The water tank can also have a valve or tap which allows water to be extracted directly from said tank in order to empty it or to obtain water directly.

The water tank can have a level indicator with safety microswitch which cuts off the electricity supply to the motorised pump assembly and provides information on the amount of water present in said water tank.

Hereafter, in order to provide a better understanding of this specification and forming an integral part thereof, a number of figures are attached in which the object of the invention is shown in an illustrative and non-restrictive manner.

### BRIEF DESCRIPTION OF THE FIGURES

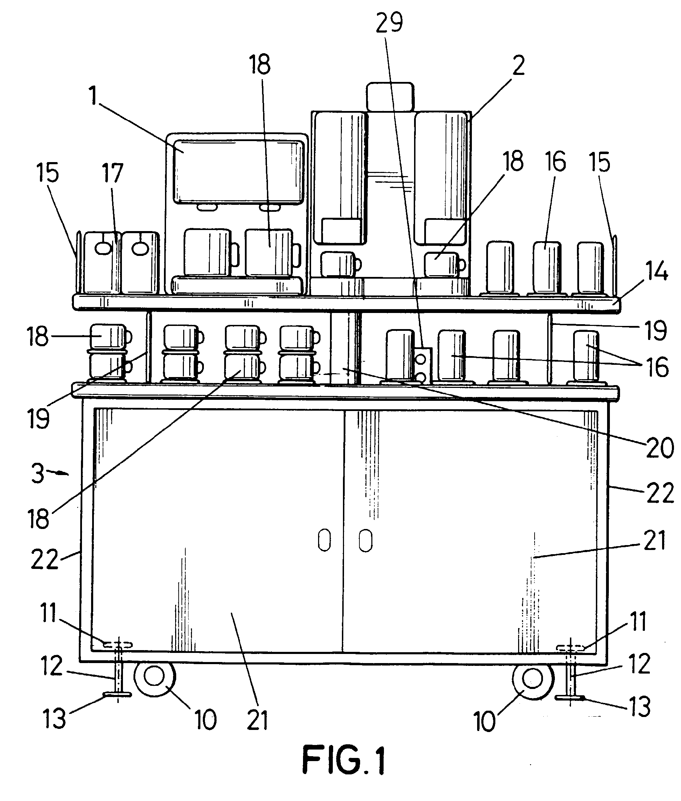

**Figure 1** represents a schematic front raised view of a mobile beverage stand implemented according to the present invention.

**Figure 2** represents a schematic profile view of the mobile stand referred to in the previous figure 1.

**Figure 3** represents a schematic plan view in cross section of the mobile stand referred to in the previous figure 1, showing the tanks and the motorised pump which are housed in the lower part of said mobile stand.

### DESCRIPTION OF AN EXAMPLE OF EMBODIMENT OF THE INVENTION

Hereinafter a description is made of an embodiment of the invention, with reference being made to the numbering adopted in the figures.

Thus, the mobile stand for dispensing beverages of this embodiment, incorporates standard machines which consist of an automatic coffee-maker 1 and a juice-making machine 2. Said machines 1 and 2 are located in the upper part of a unit 3 the lower part of which has a storage space 4 which houses : a water tank 5 which, through a water impulsion means constituted by a motorised pump 6 and through a water pipe 7, is connected to the corresponding water inlets of the machines 1 and 2 ; being held also in the space 4, is a waste water tank 8 which through a waste water pipe arrangement 9 is connected to the corresponding drainage facilities of the machines 1 and 2.

The unit 3 has means for supplying electricity to the machines 1 and 2 and to the motorised pump 6, defined by a simple standard electrical mains socket 29, and incorporating an electrical protection panel 28. In other embodiments the electricity supply can be made independent by means of batteries, generators or similar equipment.

The unit 3 includes a means of mobility defined by four wheels 10 mounted close to the extremities of the underside of said unit 3.

In addition unit 3 of this embodiment has a means for stabilising its position consisting of two braking devices mounted at the extremities of the underside of the unit 3. Each of these braking devices incorporates a handwheel or lever 11 situated inside the unit and which is connected to a threaded rod 12 which screws into the lower base of the unit 3 and which in turn is connected to a foot 13 that projects through the underside of the unit 3 ; permitting thereby that the turning of the handwheel 11 in one direction or the other determines the pressure of the foot 13 against the floor or its detachment therefrom.

The upper part of the unit 3 which supports the machines 1 and 2 is defined in this embodiment by a flat surface 14 which incorporates a skirting rail 15, so permitting a space for holding glasses 16, boxes with tea bags 17, cups 18 and similar items between the standard machines 1 and 2 and the rail 15. Between the flat surface 14 and the lower part of the unit 3 there is another space for holding said glasses 16, boxes with tea bags 17, cups 18 and similar items. The flat surface 14 is held to the lower part of the unit 3 by means of fixing pillars 19. Also, between the flat surface 14 and the lower part of the unit 3 a piping column 20 is mounted through which run the cited water piping 7, waste water piping 9 and electricity cables run.

The lower part of the unit 3, in which a storage space 4 is provided, consists of a cupboard with wide front and side doors 21 and 22 respectively.

Both the water tank 5 and the waste water tank 8 can be withdrawn from the housing 4 to facilitate their cleaning.

In this embodiment of the invention the water tank 5 has approximate dimensions of 40 x 40 x 50 cm ; and an approximate capacity of 80 litres. Logically in other embodiments said tank 5 can have other dimensions. The tank 5 has provision for being filled with natural mineral water, so that the drinks prepared with the machines 1 and 2 have an acceptable taste and moreover the useful lifetime of said machines 1 and 2 is not impaired by lime deposits, and no hydraulic installation is required.

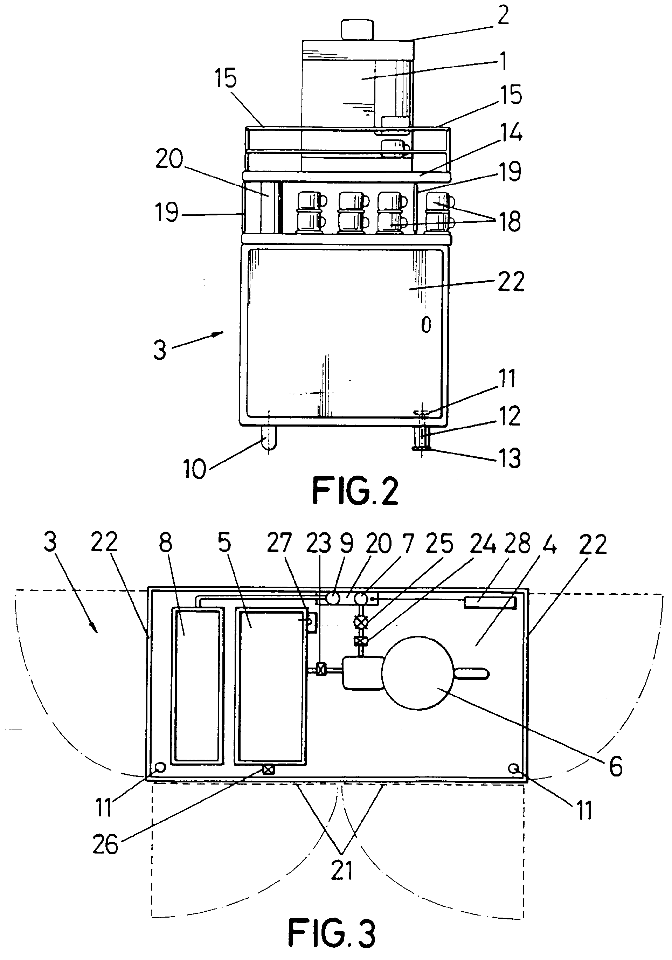

In the present example the means for delivering the mineral water to the machines 1 and 2 consist of the motorised pump 6, which is connected to the water tank 5 through a valve 23, connecting also said motorised pump 6 with the water pipe 7 through another valve 24 and a manometer 25 which permits the pressure to be controlled, the foregoing being illustrated in figure 3.

The water tank 5 of this example of embodiment also has a valve or tap 26 which permits water to be extracted directly, and a level indicator 27 which allows the amount of mineral water present in the water tank 5 mentioned to be known, as well as to interrupt the operation of the motorised pump 6 as a safety measure.

## Claims

1. Mobile beverage stand, which employs standard beverage machines such as automatic coffee makers (1), juice-making machines (2) and/or other types of machines which usually require a water inlet and a drainage facility for their operation; said mobile stand permitting the preparation of drinks from the cited machines (1, 2) without the need to have said drainage facility and water inlet available ; characterised in that it incorporates a unit (3) the upper part of which houses the cited standard machines (1, 2), whilst in its lower part there is a storage space (4) which holds:
- a water tank (5) which through a water impulsion means (6) and water pipes (7) connects with the corresponding water inlet inlets of the standard machines (1, 2), and
- a waste water tank (8) which through drainage piping (9) connects with the corresponding drainage points of the standard machines (1, 2);
such that the corresponding waste products drop by gravity into the waste product tank (8) from the standard machines (1, 2), whilst the water from the water tank (5) is pumped forwards to said machines (1, 2).

2. Mobile beverage stand, in accordance with claim 1, characterised in that said unit (3) includes means for supplying electricity to the cited standard machines (1, 2) and for supplying electricity to the water impulsion means (6), incorporating also an electrical protection panel (28).

3. Mobile beverage stand, in accordance with claim 2, characterised in that said electricity supply means consists of a standard electrical mains socket (29).

4. Mobile beverage stand, in accordance with claim 2, characterised in that said electricity supply means consists of independent means such as batteries, generators, or otherwise.

5. Mobile beverage stand, in accordance with claim 1, characterised in that said unit (3) includes means for providing mobility (10).

6. Mobile beverage stand, in accordance with claim 5, characterised in that said means for providing mobility consists of four wheels (10) mounted close to the extremities of the underside of the unit (3) mentioned.

7. Mobile beverage stand, in accordance with claim 1, characterised in that said unit (3) includes a means for stabilising it in position.

8. Mobile beverage stand, in accordance with claim 7, characterised in that said means for stabilising consists of two braking devices mounted at the extremities of the underside of the unit (3) and each one of them comprising a handwheel (11) that is situated inside the unit (3) and which connects with a threaded rod (12) which screws into the lower base of the unit (3) and which in turn connects with a foot (13) that projects through the underside of the unit (3) ; so that by turning said handwheel (11) in one direction or the other it is possible to increase the pressure of the foot (13) on the floor corresponding or to withdraw said foot.

9. Mobile beverage stand, in accordance with claim 1, characterised in that said upper part of the unit (3) consists of a flat surface (14) that supports the standard machines (1, 2) and which has a rail (15), so that between said machines (1, 2) and rail (15) a space is formed for holding glasses, cups, boxes for tea bags and similar items (16, 17, 18) ; this flat surface (14) being noticeably separated from the mentioned lower part of the unit (3) and held to it by means of fixing pillars (19), so that between the flat surface (14) and the cited lower part of the unit (3) another space is formed for holding glasses, cups, boxes with tea bags and similar items (16, 17, 18) ; there being between the upper part of the flat surface (14) and the lower part of the unit (3) a column (20) through which runs the piping for water (7), waste water (9), as well as the electrical cabling.

10. Mobile beverage stand, in accordance with claim 1, characterised in that said storage space (4) of the lower part of the unit (3) consists of a kind of cupboard with wide front (21) and side (22) doors.

11. Mobile beverage stand, in accordance with claim 1, characterised in that said water tank (5) and waste water tank (8) can be removed from the cited storage space (4).

12. Mobile beverage stand, in accordance with claim 1, characterised in that said water tank (5) has a capacity of approximately of 80 litres.

13. Mobile beverage stand, in accordance with claim 1, characterised in that said water impulsion means consists of a motorised pump (6) which connects with the water tank (5) through a valve (23) and which connects with the cited water piping (7) through another valve (24) and a manometer (25).

14. Mobile beverage stand, in accordance with claim 1, characterised in that said water tank (5) incorporates a valve or tap (26) which permits water to be withdrawn directly from said tank (5).

15. Mobile beverage stand, in accordance with claim 1, characterised in that said water tank (5) has a level indicator (27) which permits the amount of water present in said tank (5) to be known and to interrupt the operation of the motorised pump equipment (6) as a safety measure.

16. Mobile beverage stand, in accordance with claim 1, characterised in that said water tank (5) is filled with natural mineral water.
